(19) Europäisches Patentamt
European Patent Office
Office européen des brevets

(11) **EP 2 353 711 A1**

(12) **EUROPEAN PATENT APPLICATION**

(43) Date of publication:
**10.08.2011 Bulletin 2011/32**

(21) Application number: **10153195.2**

(22) Date of filing: **10.02.2010**

(51) Int Cl.:
***B01J 20/24*** *(2006.01)*
***C02F 1/28*** *(2006.01)*
***C02F 3/34*** *(2006.01)*
*C02F 101/30* *(2006.01)*
*C02F 103/24* *(2006.01)*
*C02F 103/30* *(2006.01)*

(84) Designated Contracting States:
**AT BE BG CH CY CZ DE DK EE ES FI FR GB GR HR HU IE IS IT LI LT LU LV MC MK MT NL NO PL PT RO SE SI SK SM TR**
Designated Extension States:
**AL BA RS**

(71) Applicant: **PAN-ECO S.A.**
**1219 Luxembourg (LU)**

(72) Inventors:
- **Tigini, Valeria**
  **I-10125, TORINO (IT)**
- **Prigione, Valeria**
  **I-10125, TORINO (IT)**
- **Donelli, Ilaria**
  **I-20133, MILANO (IT)**
- **Freddi, Giuliano**
  **I-20133, MILANO (IT)**
- **Bertolotto, Antonio**
  **I-12010, Vignolo, CUNEO (IT)**
- **Varese, Giovanna Cristina**
  **I-10125, TORINO (IT)**

(74) Representative: **Long, Giorgio et al**
**Jacobacci & Partners S.p.A.**
**Via Senato 8**
**20121 Milano (IT)**

(54) **Fungal biomass preparation for the treatment of industrial wastewaters containing pollutants**

(57) The present invention concerns a process for the removal of salts, surfactants and ecotoxicity from wastewaters and effluent comprising the use of a fungal biomass of *Cunninghamella elegans.*

EP 2 353 711 A1

## Description

DESCRIPTION OF THE INVENTION

The present invention finds application in the treatment of industrial wastewaters containing environmental pollutants.

BACKGROUND

The impact on the environment by industry has been recognized for some time, both in terms of water consumption and discharge of polluted wastewaters. The interest in the pollution has risen several years ago due to their possible toxicity and carcinogenicity. The chronic exposition to pollutants is recognised as one of the principal cause of tumors.

In particular, textile and tannery industries are among the most polluting industrial sectors. Actually, the processes carried out therein require the use of a wide range of chemicals, which generally are not contained in the final product, therefore becoming waste and causing disposal problems (Savin and Butnaru, 2008; Soupilas et al., 2008).

Among these chemicals, salts are largely used in industrial textile and tannery processes, especially during the dyeing phase, since they allow the colour to bind tightly to the substrate; there has been estimated that up to 500 tonnes of salts are employed for 600 tons of dyed fabric (Vishnu et al., 2008). Sodium chloride (NaCl), sodium sulphate ($Na_2SO_4$), sodium nitrite ($NaNO_2$) and ammonium chloride ($NH_4Cl$) are the most used salts. Chromium, cobalt, cadmium, nickel and copper salts are employed in lower quantities, nevertheless they are very dangerous because of the release of heavy metals (Babu et al., 2007).

In dye baths, salts concentration can reach values around 70-90 g $l^{-1}$ and, since they are not fixed to textile materials, about 75% of them ends up in the wastewaters (Bisschops and Spanjers, 2003). In most cases, the traditional methods of water treatment are unable to eliminate salts (Vishnu et al.,2008). According to the EIPPCB (European Integrated Pollution Prevention and Control Bureau) estimates, the textile industry releases more than 0.2 million of tons of salts in the environment every year (Hessel et al, 2007). Consequently, textile and tannery wastewaters can lead to the alteration of the aquatic ecosystems equilibrium: salinity is a very important parameter for aquatic life and high salt concentrations can become toxic, especially for freshwater environments (Gazzola et al., 2007). Moreover, water eutrophication problems resulting from the dissociation of salts with the release of nitrate and sulphate must not be underestimated. Finally, salts in waters can also affect the agricultural activity and salinization of underground fresh water that can seriously compromise the drinking water resources (Causapé et al., 2004).

Despite salts pollution represents a serious issue that is still unsolved, only very few studies are focused on said concern (Bisschops and Spanjers, 2003).

In addition to that, both the textile and tannery industries consume considerable amount of surfactants during the different processing stages of raw materials.

Generally, they are organic compounds comprising both a polar group and a group consisting of non-polar alkyl chains; the classification in anionic, cationic, non-ionic and amphoteric or zwitterionic surfactants depends upon said polar group.

The non-ionic surfactants, in particular ethoxylated alkylphenols (APEO), are the most recalcitrant ones. Ethoxylated nonylphenols .(NPnEOs, where "n" is the number of ethylene oxide units, ranging from 2 to 20 in industrial mixtures) are the most common APEO used in textile and tannery industry (Gonzales et al., 2008). In wastewater treatment plants, the ethoxylic chain of about 95% of the incoming NPnEOs is biodegraded or shortened to give rise to nonylphenols (NP).

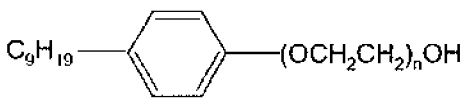

(A)

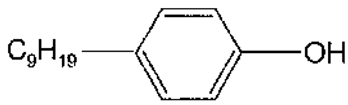

(B)

Ethoxylated nonylphenols (A) and nonylphenols (B)

Because of their reduced water solubility with respect to the parental molecules, these compounds accumulate in water sediments and fat tissues of aquatic animals (Yuan et at 2004). Nonylphenols are very toxic compounds that represent, with other alchilphenols, one of the most important categories of endocrine disrupters (etc) (Ferrara et al.,

2001; Negri, 2008).

The EU passed in July 2003 the directive 2003/53/EC, which restricts the marketing and use in Europe of products and product formulations that contain more than 0.1% of NFEO. This applies to many industries, including the textile and leather industries, except in the case of closed application systems wherein no release into wastewaters does occur. On January 2005 this EU Directive came into force.

Thus, new synthetic surfactants generally consist in linear chains, while the older ones have more recalcitrant branched chains or aromatic rings; nevertheless, the environmental impact of new synthetic surfactants is still very high because of their low biodegradability, mainly due to the non-polar component of the molecule.

Among the linear anionic surfactants, alkylbenzenesulfonates (LAS) have largely been used in the last 25 years and have been the subject of numerous studies on aquatic organisms such as fishes, crustaceans and molluscs. They resulted toxic at both the cellular, histological and physiological level, with alterations to gill tissues, inhibition or stimulation of enzymatic activity, inhibition of development and activity heart rate (Ogbulie et al., 2008; Stefanoni and Abessa, 2008: Ogundiran et al.,2009). For microorganisms, toxic effects occur with the solubilization of lipid structures, resulting in disintegration of the plasma membrane (Klebensberger et al., 2007). Other widely used linear anionic surfactants are the perfluoro-octane-sulfonic acid (PFOS) and perfluoro-octanoic acid (PFOA) belonging to the family of perfluoro-alkyl substances (PFAS). These fluorinated compounds have the ability to interfere with the endocrine system and cause hepatocellular adenoma, follicular cell adenoma of the thyroid, liver cancer in rats and teratogenicity in developing rodents (Negri, 2008).

Ecotoxicity of the whole wastewaters is another important parameter to consider, since it is the sole method enabling to detect the total impact of the pollutants (EC Directive 2008/1 IPPC). Wastewaters impact on the receiving water environments cannot be reliably predicted from the toxicity of the individual constituents, since this approach does not detect the combined biological effect of all the chemical species present and their potential synergistic effect, whereby the risk from two or more species present together is not equal to the sum of their respective toxicities (Daniel et al., 2004).

Ecotoxicity tests may be done only by means of bioassays (Daniel et al., 2004: Latif and Licek 2004; Sponza 2006), which are able to detect the total impact of the pollutants testing whole industrial wastewater samples (EC Directive 2008/11PPC).

Different organisms have been standardized for ecotoxicity evaluation and the choice of the test organism should be guided by considering the characteristics of the wastewaters (i.e. colour, turbidity) and the environment in which the wastewater is discharged.

Wastewaters variability is also an important factor to take into account; in fact, they exhibit wide fluctuations in terms of quantities and pollution load, pH and temperature, depending upon the production schedules types. Thus, wastewaters display a great chemical complexity and diversity which are not adequately treated in conventional wastewater treatment plant; therefore derivates accumulate in the environment (Fu and Viraraghavan, 2002; Alinsafi et al., 2006).

The complexity, variability and toxicity of these effluents result in the reduction of the effectiveness of traditional treatment plants for the removal of wastewater pollutants.

The wastewater treatments are commonly structured in three principal steps: primary, secondary and tertiary treatments (Davis and Masten, 2004).

During the primary treatments, effluents coming from different processes are mixed, the pH is adjusted and solids in suspension are removed through physical and chemical techniques (Foddanu et al., 2007; Davis and Masten, 2004; Mahmoud, 2009). Wastewaters received by primary treatments are homogenized, but their high pollution load and their toxicity remain unchanged.

The secondary treatments consist in the partial or total pollutant demolition by means of chemical or biochemical techniques (Foddanu et al., 2007). The most common one is the biological oxidation, which is performed by the action of a complex microorganisms community in aerated condition. In general, secondary treatments are not always effective in removing pollutants. Actually, toxicity and recalcitrance of pollutants, such as surfactants, are the major causes of the failure of biological treatments and result in non-compliance with discharge permit limits (Vijayaraghavan and Ramanujam, 1999; Aguayo et al., 2004). Moreover, inorganic pollutants like salts are non-degradable.

Thus, additional treatments are needed to reach the quality standards for wastewaters discharge, particularly in fresh waters. The adsorption of pollutants on activated carbons is the most common tertiary treatment. Other less common techniques are the filtration on membranes (microfiltration, ultrafiltration, nanofiltration and reversed osmosis) or on resins (ion exchange) and ozonation. In general, these techniques present high cost and are ineffective towards concentrated pollutants mix, moreover they can generate disposal problems or may produce toxic intermediates (Robinson et al., 2001 Adel et al., 2004; Canizares et al., 2006; Li et al., 2007; Arnal et al., 2008; Gozálvez-Zafrilla et al., 2008; Faria et al., 2009).

Thus, there is the need in industry for efficient processes for the removal of pollutants, especially salts and surfactants, from wastewaters and effluents.

Further, the development of reliable, reproducible and low-costing processes is of a great concern.

## OBJECT OF THE INVENTION

Accordingly, it is an object of the present invention a process for the removal of salts and surfactants from industrial wastewaters or effluents as per the attached claim 1 and dependent claims.
In another embodiment, the claimed process is used for the removal of the wastewaters or effluents ecotoxicity.

## BRIEF DESCRIPTION OF THE FIGURES

Figure 1. FTI R spectra of ST100 and ST50 biomasses.
Figure 2. FTIR spectra of CSLA100 and CSL50 biomasses.
Figure 3. FTIR spectra of AM100 (A) and AM50 (B) biomass before and after the treatment of W3 and W4.

## DETAILED DESCRIPTION OF THE INVENTION

According to the object of the invention, there is provided a process for the removal of salts and surfactants from industrial wastewaters or effluents.
The process, in particular, comprises the step of contacting a fungal biomass with the wastewaters or effluents to be treated for a sufficient period of time to enable the absorption of salts and surfactants, which are thus removed from said wastewaters or effluents; in particular, the process allows meeting the law prescriptions on pollutants release.
As per the present invention, the fungal biomass may be used for treating dying baths or, alternatively, wastewaters or effluents in treatment plants. In particular, the use within primary treatments, wherein the pollutants concentration is the highest, while the bacterial and protozoa concentration is the least is the most efficient..
More in detail, the used fungal biomass comprises the fungal species *Cunninghamella elegans* Lendner.
In a preferred embodiment, the *Cunninghamella elegans* Lendner (MUT 2861) fungal species is the one, which has been deposited at the DSMZ (Deutsche Sammlung von Mikroorganismen und Zellkulturen GmbH, Braunschweig, Germany) under the accession number DSMZ 18657 on September 15th 2006.
The *Cunninghamell/a elegans* Lendner species above mentioned has already been disclosed for the absorption of dyes (patent application number ep 7118877.5), but it has never been reported for the removal of salts and surfactants.
According to the present invention, two simulated wastewaters (W1 W3 and W4) have been used for assessing the absorption capacity of the disclosed fungal biomass.
In particular, the used wastewaters contain high concentrations of salts, which are widely applied in the industrial processes.
According to the present invention, in particular, salts preferably include sodium chloride, sodium sulphate, sodium nitrite and ammonium chloride, as well as chromium, cobalt, cadmium, nickel and copper salts.
In the wastewaters, they may be present at a concentration from about 1-2 g $l^{-1}$ up to about 70-100 g $1^{-1}$, according to the kind of industrial process carried out.
As for the surfactants, they may be present alone or in combination.
Preferably, they are selected in the group comprising anionic, cationic, non-ionic and amphoteric surfactants, such as, for instance, ethoxylated alkylphenols, ethoxylated nonylphenols, alkylbenzenesulphonates, perfluoro-octanesulphonic acid and perfluoro-octanoic acid.
In addition to salts and surfactants, wastewaters or effluents may also comprise other pollutants.

## SALTS AND ECOTOXICITY REMOVAL FROM MIMED EFFLUENTS BY C. *ELEGANS*

Within the present invention, the first wastewater (W1) contains a mix of 3 acid dyes (300 ppm in total), has an ionic strength of $4.23.10^{-2}$ and it is characterised by pH 5; the second wastewater (W3) contains a mix of 4 reactive dyes previously hydrolyzed (5000 ppm in total), has an ionic strength of $1.26.10^{-1}$ and pH 10; the third wastewater (W4) contains a mix of 3 direct dyes (3000 ppm in total) and has an ionic strength of 1.48 and pH 9. The exact composition of the two wastewaters is reported in Table 1 below.

Table 1. Wastewaters composition and pH.

| Wastewater | Dyes and salts | Concentration (mg l-1) | pH |
|---|---|---|---|
| Acid bath for wool (W1) | Abu62 | 100 | 5 |
| | AY49 | 100 | |
| | AR266 | 100 | |
| | $NaSO_4$ | 2000 | |
| Reactive bath for cotton (W3) | Rbu222 | 1250 | 10 |
| | RR195 | 1250 | |
| | RY145 | 1250 | |
| | Rbk5 | 1250 | |
| | $Na_2SO_4$ | 70000 | |
| Direct bath for cotton (W4) | DrBu71 | 1000 | 9 |
| | DrR80 | 1000 | |
| | DrY | 1000 | |
| | NaCl | 5000 | |

The simulated wastewaters were sterilised by tindalisation (3 1-hour cycles at 60 °C with 24 hours interval between cycles at room temperature) before use.

*Biomass preparation*

C. *elegans* Lendner (MUT 2861) was obtained from the *Mycotheca Universitatis Taurinerrsis* Collection (MUT, University of Turin, Department of Plant Biology). Starting culture was lyophilised and cryopreserved until use. It was revitalised on Malt Extract Agar and mature conidia for the inocula were obtained from cultures grown on the same medium in the dark at 24°C for 1 week.

C. *elegans* was inoculated as a conidial suspension (final concentration of 1-$10^5$ conidia ml $^{1}$) on 10 media characterized by different C and N sources, at different concentrations:

| | |
|---|---|
| **AM 100% (AM100):**<br>18 g $1^{-1}$ cereals starch<br>2 g $1^{-1}$ ammonium tartrate | **AM 50% (AM50):**<br>9 g $1^{-1}$ cereals starch<br>1 g $l^{-1}$ ammonium tartrate |
| 2 g $l^{-1}$ $KH_2PO_4$<br>0.5 g $l^{-1}$ $MgSO_47H_2O$<br>0.1 g $l^{-1}$ $CaCl_22H_2O$<br>10 ml mineral stock solution | 2 g $l^{-1}$ $KH_2PO_4$<br>0.5 g $l^{-1}$ $MgSO_47H_2O$<br>0.1 g $l^{-1}$ $CaCl_2$-$2H_2O$<br>10 ml mineral stock solution |
| **ST 100% (ST100):**<br>18 g $l^{-1}$potato starch<br>2 g $l^{-1}$ ammonium tartrate<br>2 g $l^{-1}$ $KH_2PO_4$<br>0.5 g $l^{-1}$ $MgSO_47H_2O$<br>0.1 g $l^{-1}$ $CaCl_22H_2O$<br>10 ml mineral stock solution | **ST 50% (ST50):**<br>9 g $l^{-1}$ potato starch<br>1 g $l^{-1}$ ammonium tartrate<br>2 g $l^{-1}$ $KH2PO_4$<br>0.5 g $l^{-1}$ $MgSO_47H_2O$<br>0.1 g $l^{-1}$ $CaCl_2H2O$<br>10 ml mineral stock solution |
| **EQ100% (EQ100):**<br>20 g $l^{-1}$ glucose<br>2 g $l^{-1}$ ammonium tartrate | **EQ50% (EQ50):**<br>10 g $l^{-1}$ glucose<br>1 g $l^{-1}$ ammonium tartrate |

(continued)

| | |
|---|---|
| **EQ100% (EQ100):**<br>2 g $l^{-1}$ $KH_2PO_4$<br>0.5 g $l^{-1}$ $MgSO_47H_2O$<br>0.1 g $l^{-1}$ $CaCl_22H_2O$<br>10 ml mineral stock solution | **EQ50% (EQ50):**<br>2 g $l^{-1}$ $KH_2PO_4$<br>0.5 g $l^{-1}$ $MgSO_4.7H_2O$<br>0.1 g $l^{-1}$ $CaCl_2.2H_2O$<br>10 ml mineral stock solution |
| **CSL A 100% (CSLA100):**<br>20 g $l^{-1}$ Corn Steep Liquor<br>2 g $l^{-1}$ ammonium tartrate<br>2 g $l^{-1}H_2PO_4$<br>0.5 g $l^{-1}$ $MgSO_47H_2O$<br>0.1 g $l^{-1}CaCl_2.2H_2O$<br>10 ml mineral stock solution | **CSL A 50% (CSLA50):**<br>10 g $l^{-1}$ Corn Steep Liquor<br>1 g $l^{-1}$ ammonium tartrate<br>2 g $l^{-1}$ $KH_2PO_4$<br>0.5 g $l^{-1}$ $MgSO_4.7H_2O$<br>0.1 g $l^{-1}$ $CaCl_2.2H_2O$<br>10 ml mineral stock solution |
| **CSL B 100% (CSLB100):**<br>20g $l^{-1}$ Corn Steep Liquor | **CSL B 50% [CSLB50):**<br>10 g $l^{-1}$ Corn Steep Liquor |

CLS medium is obtained from the fermentation of mais and contains, in addition to C and N sources, vitamins and proteins.

The biomasses were incubated at 30 °C for 7 days. To avoid the production of aerial mycelium, rich in hydrophobins and poorly adsorbent, biomasses were cultured under stirred condition at 150 rpm in a Minitron Infors orbital shaker (Bottmingen, CH). After incubation biomasses were collected with a sieve (150 μm pore), rinsed several times with distilled sterilised water to remove residual medium and then inactivated by autoclaving at 121 °C for 30 min. They were then collected under sterile conditions and rinsed as above described. Finally, the biomasses were squeezed by means of a vacuum pump.

*Batch biosorption experiments*

An amount of biomass corresponding to 0.5 g of biomass dry weight was placed in 50 ml Erlenmayer flasks containing 30 ml of simulated wastewaters. The flasks were incubated at 30°C under stirred conditions (150 rpm). Each trial was performed in triplicate. Simulated wastewaters without biomass were used as abiotic controls.

After 24 hours, the biomasses were filtered on filter paper (Whatman type 1).

*Characterization* of *the* fungal *biomasses*

All the fungal biomasses were characterized by Fourier Transform Infra Red (FTIR) spectroscopy, before and after the biosorption treatment. The analyses were performed in collaboration with the Stazione Sperimentale per la Seta in Milan. Biomasses were lyophilized (Lyophilizer LIO 10P, Cinquepascal, Trezzano s/n,Italy) and biomass pellets were prepared in KBr discs. FTIR spectra were obtained with a Thermo Nicolet Nexus spectrometer in the 4000-400 $cm^{-1}$ wavenumber range. Spectra were recorded by accumulating 64 scans at a resolution of 4 $cm^{-1}$ and normalized to the 1460 $cm^{-1}$ peak before any data processing.

Salts measurement

The $S0_4^{2-}$ ions concentration was measured using a Dionex ICS 300 system equipped with an lonPac AS4A 4x250 mm column, a conductivity detector combined to a ASRS300 conductivity suppressor system (Dionex Corporation, Sunnyvale,CA, USA). The eluent was a solution of 1,8 mM $Na_2CO_3$ and 1,7 mM $NaHCO_3$ prepared in ultra-resi-analyzed water; the flow rate was 2 ml $min^{-1}$ and the injection volume was 25 μl.

The $Na^+$ ions concentration was measured using a Dionex DX 100 system equipped with an lonPac CS12 4x250 mm column, a conductivity detector combined to a CSRS 300 conductivity suppressor system (Dionex Corporation, Sunnyvale, CA, USA). The eluent was a solution of 20 mM metasulfonic acid prepared in ultra-resi-analyzed water; the flow rate was 2 ml $min^{-1}$ and the injection volume was 25 μl.

*Ecotoxicity test*

The algae test with a monospecies culture of *Pseudokirkneriella subcapitata* (Korshikov) Hindak (ex *Selenastrum capricarnutum* Prinz.) closely followed the recommendations of the International Organisation of Standardization (UNI EN ISO 8692:2005). Regular tests with $K_2Cr_2O_4$ were performed to test the sensibility of the clone.

Each dose-response curve consisted of 12 dilutions and $10^4$ cell $ml^{-1}$ were inoculated in 3 ml well containing 2.5 ml of diluted sample. The test was performed in triplicate and a forth repetition without the algal inoculum was used as the abiotic control. The common control (algal inoculum in algal medium) was performed with 6 repetitions. The inocula were incubated for 72$\pm$2 hours, at 23 $\pm$2 °C, and at 8000 $\pm$ 2000 lux.

After 48 hours, the cell concentration was measured with a Coulter Counter (Beckman Coulter Z2) calibrated for 3-5 μmsize cell. The inhibition percentage was calculated according to the following formula:

$$I\mu i = (\mu c - \mu i)/\mu c \cdot 100 \qquad [1]$$

where μc = [In (common control) - In 10000]/3; μi = [In (cells number of the sample - abiotic control) - In (10000)]/3.

Since the data distribution of the treated samples resulted in a very flat sigmoid dose-effect function the EC50 was quite always not calculable. Thus, in order to evaluate the reduction of the ecotoxicity after biosorption, the results were elaborated comparing the effect caused by the highest tested dose of the treated sample to that one of the untreated wastewater.

RESULTS

*Characterization of the fungal biomasses*

The results of these experiments indicate that the origin of C and N sources causes significant changes in the composition of the fungal cell wall. In particular, biomasses grown on starches (AM100 and ST100) were characterized by the presence of all the main cell wall components, with high amount of chitin and polysaccharides. The use of glucose for the fungus culture resulted in biomass rich in acidic polysaccharides and lipids. By contrast, the use of corn steep liquor resulted in biomasses (CSLA100 and CSLB100) very poor in acidic polysaccharides. The addition of N sources and micronutrients to the corn steep liquor medium resulted in a biomass (CSL100) very rich in proteins with respect to the biomass cultured on the sole corn steep liquor (CSLB100).

Moreover, halving the C and N sources turned in biomass generally reach in lipids. Examples of these changes in biomass composition are shown in Figures 1 and 2.

*Salts removal*

In W1, the $Na^+$ and $SO_4^{2-}$ ions concentrations were 790 mg $l^{-1}$ and 1405 mg $l^{-1}$, respectively. In W3, the $Na^+$ and $SO_4^{2-}$ ions concentrations were 30740 mg $l^{-1}$ and 51484 mg $l^{-1}$, respectively. The results of the sulphate and sodium ions removal in W1 and W3 are shown in Table 2 as an example of the salt adsorption capabilities of the C. *elegans* biomass . Table 2. $Na^+$and $SO_4^{2-}$ removal percentages in W1 and W3 effluents after the treatment by inactivated biomasses cultured on different media.

| Effluent | Sample | $Na^+$ removal percentage | $S0_4^{2-}$ removal percentage |
|---|---|---|---|
| W1 | AM100 | 11,4% | 18,9% |
| | AM50 | 31,6% | 31,0% |
| | ST100 | 6,2% | 11,7% |
| | ST50 | 25,3% | 31,7% |
| | EQ100 | 20,3% | 23,8% |
| | EQ50 | 21,5% | 26,0% |
| | CSLB100 | 15,2% | 21,9% |
| | CSLB50 | 21,5% | 24,0% |
| | CSLA100 | 11,4% | 11,7% |
| | CSLA50 | 20,3% | 14,0% |
| W3 | AM100 | 6,6% | 28,2% |
| | AM50 | 38,1% | 56,9% |
| | ST100 | -8,7% | 6,4% |
| | ST50 | 29,1% | 21,4% |
| | EQ100 | 14,7% | 8,0% |
| | EQ50 | 20,5% | 14,1% |
| | CSLB100 | 35,7% | 27,6% |
| | CSLB50 | 27,8% | 18,4% |
| | CSLA100 | 19,7% | 12,8% |
| | CSLA50 | 34,7% | 29,5% |

Salts were substantially removed by the different biomasses, irrespective of their cell wall composition. In W1, the highest $Na^+$ removal percentage (32%) was achieved by AM50 biomass, whereas the highest $S0_4^{2-}$ removal percentage (32%) was achieved by ST50 biomass.

In W3, the AM50 biomass showed the highest removal percentages for both $Na^+$ and $SO_4^{2-}$ions, with a decrease of 38% and 57%, respectively. An increase of 8.7% for the $Na^+$ ions was detected in one case only (ST100).

FTIR analysis confirmed the adsorption of salts on biomasses. Actually, two peaks at 1104 $cm^{-1}$ and 618 $cm^{-1}$, corresponding to the $SO_4^{2-}$ ions, were always found in all the spectra of the biomasses put in contact with W3. In addition to $Na^+$ ions, also $Cl^-$ ions were removed: they were not analyzed by chemical analysis, but the peak about 1200 $cm^{-1}$, corresponding to the $Cl^-$ ions, was found in all the FTIR spectra of the biomasses put in contact with W4. Some examples are reported in Figure 3.

*Ecotoxicity* test

For W1 and W4 the ecotoxicity reduction percentages were calculated comparing the 25% wastewater dilution dose; whereas, for W3 the selected dilution dose was 3% because of its high ecotoxicity. The results are reported in Table 3.

Table 3. Ecotoxicity reduction percentage of W1, W3 and W4 effluents after the biosorption treatment by inactivated biomasses of *C. elegans* cultured on different media.

| Biomass | W1<br>(25% dose) | W3<br>(3% dose) | W4<br>(25% dose) |
|---|---|---|---|
| AM100 | 99.1% | 48.9% | 96.9% |
| AM50 | 76.3% | 52.7% | 81.8% |
| ST100 | 93.8% | 55.0% | 90.8% |

(continued)

| Biomass | W1 (25% dose) | W3 (3% dose) | W4 (25% dose) |
|---|---|---|---|
| ST50 | 86.0% | 64.9% | 78.0% |
| EQ100 | 74.6% | 0.0% | 37.9% |
| EQ50 | 65.8% | 76.6% | 14.0% |
| CSLB100 | 20.8% | 35.3% | 0.0% |
| CSLB50 | 47.8% | 18.9% | 23.1% |
| CSLA100 | 63.7% | 12.5% | 2.0% |
| CSLA50 | 52.8% | 37.3% | 26.7% |

In almost all the cases, the wastewaters ecotoxicity decreased after the biosorption treatment with fungal biomasses by more than 50%, while in some cases the removal was almost complete. The best results towards W1 and W4 were achieved by AM100, whereas EQ50 determined the highest detoxification rate towards W3.

The chemical analysis showed that all the biomasses used in this study are characterized by excellent adsorption capacity towards salts (NaCl and $Na_2SO_4$). The biomass that displayed the best result for both $SO_4^{2-}$ and $Na^+$ was AM50, with removal percentage of 57% and 38%, respectively. Interestingly, the biomasses cultured in media with halved C and N sources showed higher affinity for salts than the corresponding biomasses cultured in media with 100% C and N sources.

These results are very important, since about 75% of the huge amount of salts used during dyeing processes is released in water stream because of the inefficacy of traditional WWTP (Bisschops and Spanjers, 2003).

SALTS, SURFACTANTS AND ECOTOXICITY REMOVAL FROM REAL WASTEWATERS BY *C. ELEGANS*

*Biosorbents*

*C. elegans* biomass was cultured in AM100 medium as above described, since it was the most productive medium and the biomass cultured on this medium achieved the highest detoxification rate in simulated wastewaters. Subsequently, biomass was lyophilised (Lyophiliser LIO 10P, Cinquepascal,Trezzano s/n, Italy) and powdered.

*Real wastewaters*

Eight real wastewaters were tested in these experiments. Samples include both exhausted dye baths representative of different dye types and processes and effluents sampled from a wastewater treatment plant (WWTP).

In detail, 4 samples were industrial spent dye baths representative of different dye types and fibres (acid, vat, reactive) from batch dyeing processes (Table 4).

Table 4. Real spent dye baths coming from batch process.

| Effluent | Acronym | Dyes | Salt | pH | Auxiliaries |
|---|---|---|---|---|---|
| Real Acid Bath for Polyester 1 | RABP 1 | Mix of 3 dyes at 433 mg $l^{-1}$ | - | 5.0 | Surfactants, weak acid, fixatives |
| Real Acid Bath for Polyester 2 | RABP 2 | 1 dye at 645 mg $l^{-1}$ | - | 5.7 | Surfactants, weak acid, fixatives |
| Real Vat Bath for Cotton | RVBC | Mix of 2 dyes at 1857 mg $l^{-1}$ | 22 g $l^{-1}$ | 13.0 | Weak acid, strong base |
| Real Reactive Bath for Cotton | RRBC | Mix of 3 dyes at 542 mg $l^{-1}$ | 77 g $l^{-1}$ | 10.9 | Weak acid, strong base |

Moreover, 4 effluents were sampled in different points (homogenization tank and after the biological treatment with activated sludges) of two WWTPs (Table 5). The plant A treats about 4500 $m^3$ per day of wastewaters coming from cotton, polyester and polyamide dyeing processes, moreover it collects the wastewaters coming from other industrial plants. The plant B treats about 3000-4000 $m^3$ per day of wastewaters coming from cotton dyeing process with reactive

and vat dyes.

Table 5. Real effluents sampled at different steps of wastewater treatment plants.

| Plant | Effluent | Acronym |
|---|---|---|
| A | homogenization tank | A1 |
| | after activated sludges | A2 |
| B | after activated sludges | B1 |
| | post ozonation | B2 |

*Biosorption experiments*

*C.* elegans biomass was weighted and up to 16.6 g dry weight were placed in 1000 ml of real spent dye baths or effluents. Biosorption experiments were performed as above described. After 120 min, the biomasses were filtered on filter paper (Whatman type 1).

Chloride and sulphate ions measurements were performed according to the method APAT CNR IRSA 4020-2003. Non-ionic surfactants measurements were performed according to the method UNI 10511-1:1996 or Unichim 980/1-1993. Anionic surfactants measurements were performed according to the methods APAT CNR IRSA 5170-2003. Ecotoxicity test was performed as above described.

RESULTS

Removal percentages of $Cl^-$ and $SO_4^{2-}$ ions and surfactants from real dye baths are reported in Table 6.

Table 6. Removal percentages of $Cl^-$ and $SO_4^{2-}$ ions and surfactants from real dye baths.

| | $Cl^-$ | $SO_4^{2-}$ | Anionic surfactants | Non-ionic surfactants |
|---|---|---|---|---|
| RABP 1 | 3.6 | 12.1 | - | -1.8 |
| RABP 2 | 4.4 | 28.8 | 98.9 | 86.5 |
| RVBC | 12.5 | 1.7 | - | 42,7 |
| RRBC | -1.9 | 8.2 | 84.7 | 42.7 |

The highest $Cl^-$ removal yield was recorded towards the sample RVBC (13%). The highest $SO_4^{2-}$ removal was recorded towards the acid bath RABP 2 (29%). Since no salt was added individually in the acid dye baths, probably the removed ions came from salts present in other reagents, especially dyestuffs, which are generally not pure. The highest removal of both anionic and non-ionic surfactants was recorded towards RABP 2 (up to 99%). Very good surfactants removal was recorded also for RVBC and RRBC. In one case (RABP 1), the difference in surfactants concentration was negligible.

The ecotoxicity reduction of real treated wastewaters is shown in Table 7.

Table 7. Ecotoxicity reduction of real spent dye baths treated with C. *elegans.*

| Effluent | Highest tested dose (%v/v) | Detoxification percentage |
|---|---|---|
| RABP 1 | 50.0% | 100.0% |
| RVBC | 1.5% | 26.7% |
| RRBC | 4.0% | 30.5% |

The insoluble dyes present in vat bath interfered with the automatic counting or algal cells performed with a Coulter Counter, which is based on conductivity measurements: thus, RVBC was analyzed at very high dilution rate.

The reactive batch baths RRBC was very toxic, thus ecotoxicity variation was measured only at very high dilution rate, at which, however, up to 30% detoxification was recorded. The effectiveness in $Cl^-$ $SO_4^{2-}$ and surfactants removal towards effluents of WWTP are reported in Table 8 below.

Table 8. Removal percentages of $Cl^-$ and $S0_4^{2-}$ ions and surfactants from real effluents from WWTPs.

| Effluent | $Cl^-$ | $SO_4^{2-}$ | Anionic surfactants | Non-ionic surfactants |
|---|---|---|---|---|
| A1 | -13.3% | 8.0% | 15.8% | 63.2% |
| A2 | 12.6% | 11.7% | 42.9% | -12.5% |
| B1 | 31.1% | 8.6 | - | - |
| B2 | 60.2% | 41.4 | - | - |

$Cl^-$ was removed up to 60%(B2).$SO_4^{2-}$ decreased from 8% (A1) to 41% (B2). Anionic surfactants decreased from 16% (A1) to 43% (A2), whereas non-ionic surfactants decreased only in A1(63%).

The biosorption results towards samples coming from different points of the wastewater treatment plant indicate that C. *elegans* exploitation is useful at each stage of the wastewater treatment: after the primary treatments, i.e. the homogenization tank, after the secondary treatments, i.e. activated sludges, and after the tertiary treatments, i.e. ozonation. Moreover, performing biosorption before the activated sludges could enhance the treatability of effluents in the subsequent stages of the WWTPs. As a consequence, the pollution load of the aeration tank is reduced, thus allowing more effective biological treatment, which, in turn, could reduce the need for expensive tertiary treatments.

The results obtained indicate that C. *elegans* biomass is an excellent biosorbent, which could be a valid alternative or integration to activated carbons, polyelectrolytes or ozonation. Noteworthy, C. *elegans* biomass showed an extraordinary versatility in adsorbing different molecules as both salts and surfactants were shown to decrease after the biosorption treatment.

It is now generally accepted that the removal of only some pollutants from wastewaters or effluents does not amount to a true detoxification.

Accordingly, in another embodiment, the invention process has demonstrated to reduce the ecotoxicity of wastewaters and effluents to a very large extent.

According to the above disclosure, the fungal preparation of the present invention surprisingly is capable of removing salts and surfactants from industrial wastewaters, thus achieving said purpose.

Moreover, the disclosed process for the removal of salts and surfactants is a quick process and thanks to its robustness and stability it can be combined with physical-chemical and biological wastewaters pre-treatment techniques known in the art, in order to reach the complete removal of pollutants and thus allowing the possible reuse of the treated water. The person skilled in the art will thus appreciate that the fungal preparation of the invention can be useful for the treatment of wastewaters produced by any kind of industry.

The versatility shown by the invention fungal biomass makes it possible further applications, like in the biotechnological field.

## Claims

1. A process for the removal of salts and surfactants from wastewaters or effluents, comprising the step of contacting a fungal biomass with said wastewaters or effluents for a sufficient period of time to enable the absorption of said salts and surfactants, wherein said fungal biomass comprises the fungal species *Cunninghamella elegans* Lendner.

2. The process for the removal of salts and surfactants from wastewaters or effluents according to claim1, wherein the fungal biomass is of the fungal species *Cunninghamella elegans* Lendner.

3. The process for the removal of salts and surfactants from wastewaters or effluents according to claim1 or 2, wherein said *Cunninghamella elegans* Lendner species is the *Cunninghamella elegans* Lendner deposited under the accession number DSMZ18657.

4. The process for the removal of salts and surfactants from wastewaters or effluents,according to claims1 to 3, wherein said fungal biomass has been grown on a medium containing a carbon source.

5. The process for the removal of salts and surfactants from wastewaters or effluents according to claims1-4, wherein said carbon source is selected in the group comprising starch, glucose or mixture thereof.

6. The process for the removal of salts and surfactants from wastewaters or effluents according to claim 5, wherein

said carbon source is starch.

7. The process for the removal of salts and surfactants from wastewaters or effluents according to claim 4, wherein the medium for growing the fungal mass further contains salts and proteins...

8. The process for the removal of salts and surfactants from wastewaters or effluents according to any of the preceding claims, wherein the fungal biomass is autoclaved or lyophilized before use.

9. The process for the removal of salts and surfactants from wastewaters or effluents according to any of the preceding claims, wherein said salts are selected in the group comprising sodium chloride, sodium sulphate, sodium nitrite and ammonium chloride.

10. The process for the removal of salts and surfactants from wastewaters or effluents according to any of the preceding claims, wherein said salts are contained in the wastewaters of effluents at a concentration from about 1 g $l^{-1}$ to about 100 g $l^{-1}$ .

11. The process for the removal of salts and surfactants from wastewaters or effluents according to any of the preceding claims,wherein said surfactants are selected in the group comprising anionic, cationic, non-ionic and amphoteric surfactants.

12. The process for the removal of salts and surfactants from wastewaters or effluents according to any of the preceding claims, wherein said surfactants are selected from the group comprising ethoxylated alkylphenols, ethoxylated nonylphenols, alkylbenzenesulphonates, perfluoro-octanesulphonic acid, perfluoro-octanoic acid.

13. The process for the removal of salts and surfactants from wastewaters or effluents according to any of the preceding claims, wherein said fungal biomass is used for untreated spent dye baths or after any of primary, secondary otertiary treatment for the treatment of said wastewaters or effluents.

14. A process for the reduction of the ecotoxicity of wastewaters or effluents comprising the step of contacting a fungal biomass with said wastewaters or effluents for a sufficient period of time, wherein said fungal biomass comprises the fungal species *Cunninghamella elegans* Lendner.

15. The process according to claim 14, wherein the fungal species is the *Cunninghamella elegans* Lendner deposited under the accession number DSMZ 18657.

16. The process according to claim 14 or 15, wherein the ecotoxicity of wastewaters or effluents is reduced by at least 50%, preferably by at least 70% and more preferably by at least 80% according to the algae test with monospecies culture of *Pseudokirkneriella subcapitata* and the UNI EN ISO 8692:2005 standard.

FIG. 1

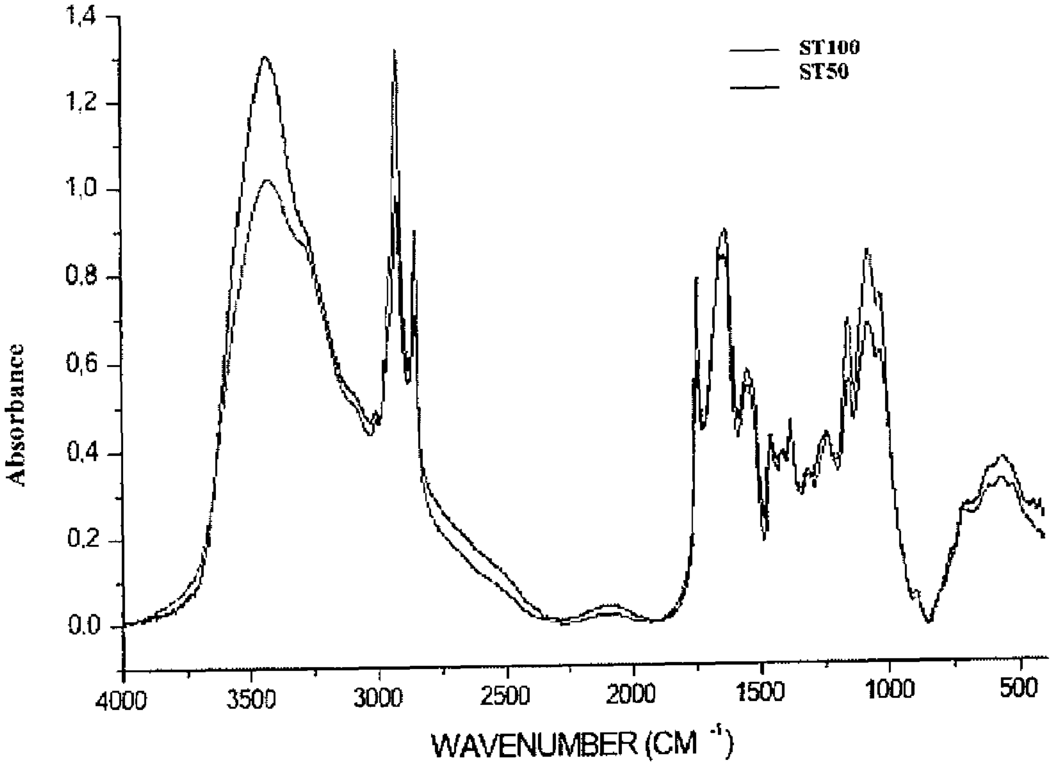
ST100
ST50
Absorbance
1,4
1,2
1,0
0,8
0,6
0,4
0,2
0,0
4000
3500
3000
2500
2000
1500
1000
500
WAVENUMBER (CM -1)

FIG. 2

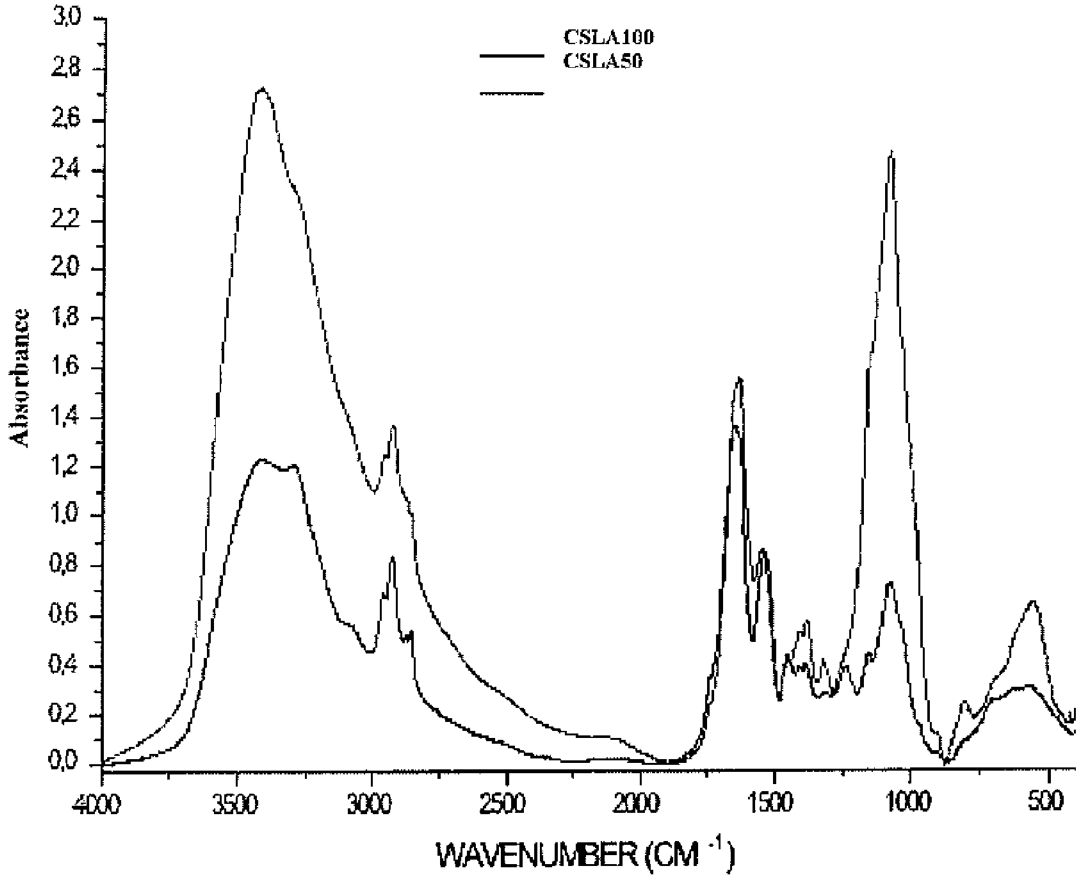
CSLA100
CSLA50
Absorbance
3,0
2,8
2,6
2,4
2,2
2,0
1,8
1,6
1,4
1,2
1,0
0,8
0,6
0,4
0,2
0,0
4000
3500
3000
2500
2000
1500
1000
500
WAVENUMBER (CM -1)

FIG. 3A

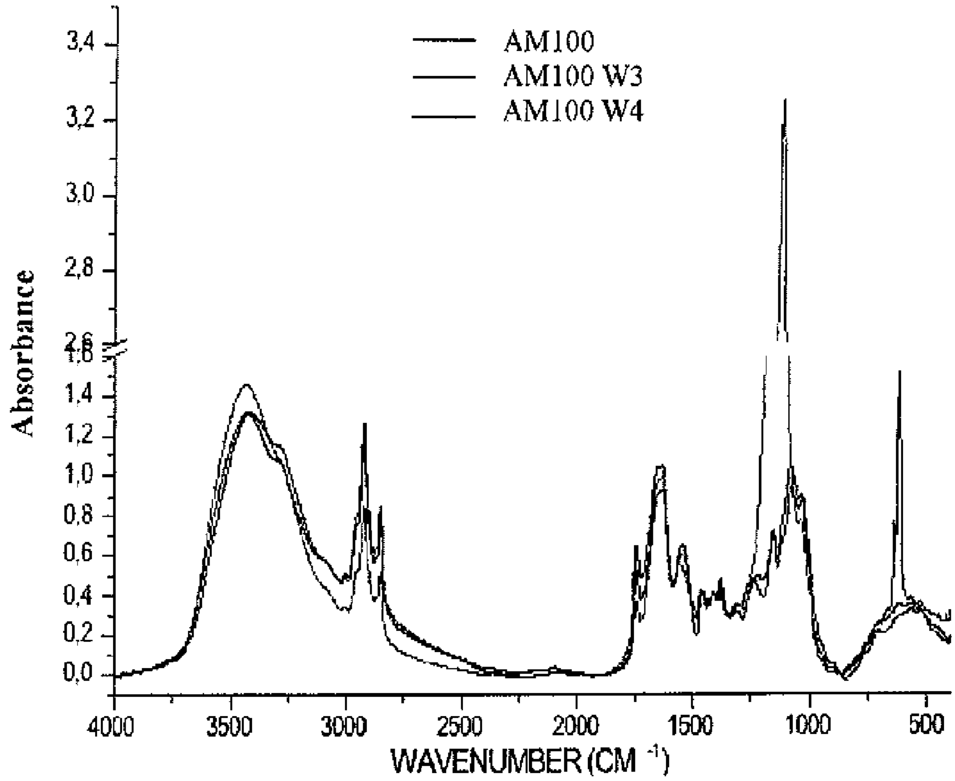
AM100
AM100 W3
AM100 W4
Absorbance
3,4
3,2
3,0
2,8
2,6
1,6
1,4
1,2
1,0
0,8
0,6
0,4
0,2
0,0
4000
3500
3000
2500
2000
1500
1000
500
WAVENUMBER (CM -1)

FIG. 3B

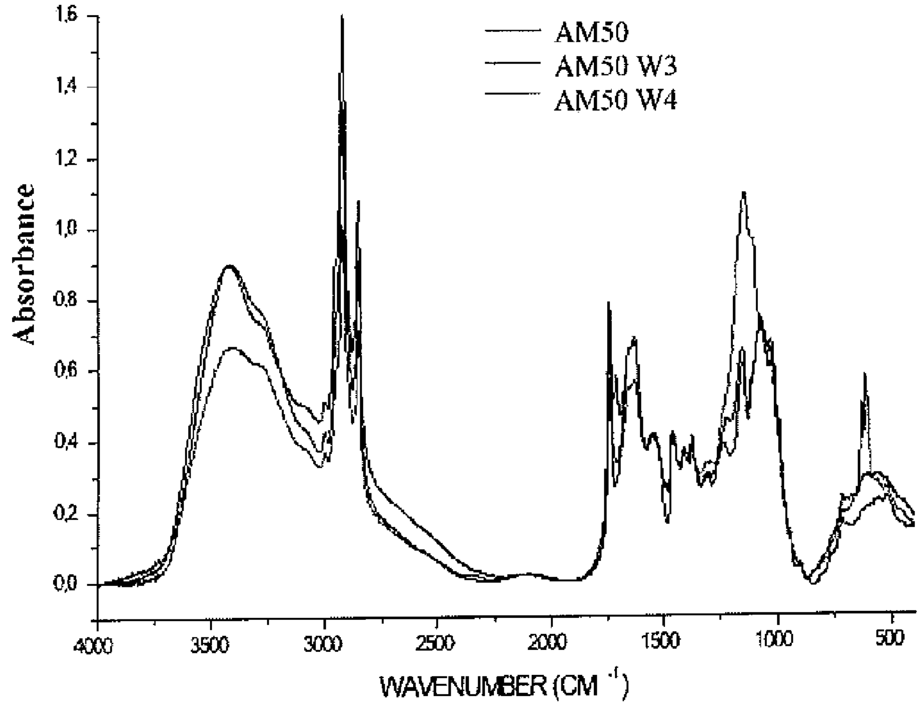
AM50
AM50 W3
AM50 W4
Absorbance
1,6
1,4
1,2
1,0
0,8
0,6
0,4
0,2
0,0
4000
3500
3000
2500
2000
1500
1000
500
WAVENUMBER (CM -1)

Europäisches Patentamt
European Patent Office
Office européen des brevets

# EUROPEAN SEARCH REPORT

Application Number
EP 10 15 3195

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 1 921 045 A1 (MARCOPOLO ENGINEERING SPA [IT]; UNIV DEGLI STUDI TORINO [IT]) 14 May 2008 (2008-05-14) * the whole document * ----- | 1-16 | INV. B01J20/24 C02F1/28 C02F3/34 |
| X | PRIGIONE V ET AL: "Decolourisation and detoxification of textile effluents by fungal biosorption" WATER RESEARCH, ELSEVIER, AMSTERDAM, NL LNKD- DOI:10.1016/J.WATRES.2008.03.003, vol. 42, no. 12, 1 June 2008 (2008-06-01), pages 2911-2920, XP022709887 ISSN: 0043-1354 [retrieved on 2008-03-18] * the whole document * ----- | 1-16 | ADD. C02F101/30 C02F103/24 C02F103/30 |
| X | PRIGIONE ET AL: "Biosorption of simulated dyed effluents by inactivated fungal biomasses" BIORESOURCE TECHNOLOGY, ELSEVIER BV, GB LNKD- DOI:10.1016/J.BIORTECH.2007.07.053, vol. 99, no. 9, 22 February 2008 (2008-02-22), pages 3559-3567, XP022494951 ISSN: 0960-8524 * the whole document * ----- | 1-16 | TECHNICAL FIELDS SEARCHED (IPC) B01J C02F |
| A | BANKS C J ET AL: "THE MECHANISM AND APPLICATION OF FUNGAL BIOSORPTION TO COLOUR REMOVAL FROM RAW WATERS" JOURNAL OF CHEMICAL TECHNOLOGY AND BIOTECHNOLOGY, BLACKWELL SCIENTIFIC PUBLICATIONS. OXFORD, GB, vol. 54, no. 2, 1 January 1992 (1992-01-01), pages 192-196, XP000269977 ISSN: 0268-2575 * table 1 * ----- -/-- | 1 | |

The present search report has been drawn up for all claims

| Place of search | Date of completion of the search | Examiner |
|---|---|---|
| The Hague | 26 July 2010 | Châtellier, Xavier |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

2

EPO FORM 1503 03.82 (P04C01)

Europäisches Patentamt
European Patent Office
Office européen des brevets

# EUROPEAN SEARCH REPORT

Application Number
EP 10 15 3195

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | SILVIA M.J.C.S. CABRAL, M. TERESA VASCONCELOS, JOÃO P.S. CABRAL: "Suitability of a detergent-sensitive electrode for the determination of the absorption of cationic detergents by fungal conidial cells" JOURNAL OF MICROBIOLOGICAL METHODS, [Online] vol. 24, 1995, - 31 December 1995 (1995-12-31) pages 11-20, XP002593546 * page 11 - page 12 * ----- | 1 | |
| | | | TECHNICAL FIELDS SEARCHED (IPC) |

The present search report has been drawn up for all claims

| Place of search | Date of completion of the search | Examiner |
|---|---|---|
| The Hague | 26 July 2010 | Châtellier, Xavier |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

2

EPO FORM 1503 03.82 (P04C01)

## ANNEX TO THE EUROPEAN SEARCH REPORT ON EUROPEAN PATENT APPLICATION NO. EP 10 15 3195

This annex lists the patent family members relating to the patent documents cited in the above-mentioned European search report.
The members are as contained in the European Patent Office EDP file on
The European Patent Office is in no way liable for these particulars which are merely given for the purpose of information.

26-07-2010

| Patent document cited in search report | Publication date | Patent family member(s) | Publication date |
|---|---|---|---|
| EP 1921045 A1 | 14-05-2008 | CA 2609272 A1 | 13-05-2008 |
| | | US 2008110824 A1 | 15-05-2008 |

EPO FORM P0459

For more details about this annex : see Official Journal of the European Patent Office, No. 12/82